# FASCICULE DE BREVET EUROPEEN

(11) **EP 1 136 727 B1**
(45) Date de publication et mention de la délivrance du brevet: **02.06.2010**
(21) Numéro de dépôt: 01400761.1
(22) Date de dépôt: 23.03.2001
(51) Int. Cl.: F16H 61/20

(54) **Dispositif pour commander un récepteur hydraulique de boite de vitesses automatique, et procédé appliqué à ce dispositif**
Einrichtung und Verfahren zur Steuerung der Druckmittelversorgung eines hydraulischen Verbrauchers in einem Automatikgetriebe
Apparatus and associated method for controlling a hydraulic clutch or brake in an automatic transmission

(30) Priorité: 23.03.2000 FR 0003697
(43) Date de publication de la demande: 26.09.2001
(73) Titulaire: RENAULT S.A.S., 92100 Boulogne Billancourt (FR)
(72) Inventeur: Plante, François, 78320 Levis Saint Nom (FR)

(56) Documents cités:
- EP-A- 0 628 742
- FR-A- 2 032 126
- FR-A- 2 466 797
- FR-A- 2 750 746
- US-A- 4 718 525
- US-A- 4 840 263
- US-A- 5 611 750
- US-A- 5 921 884

## Description

La présente invention se rapporte à un dispositif pour commander un récepteur hydraulique de boîte de vitesses automatique, et à un procédé appliqué à ce dispositif.

On connaît de la technique antérieure un système pour commander au moins un récepteur hydraulique destiné à coupler une boîte de vitesses automatique à un convertisseur de couple monté sur un ensemble moto-propulseur de véhicule automobile, comprenant au moins une vanne mobile entre une première position permettant d'envoyer un fluide sous pression dans ledit récepteur de manière à placer ce dernier en position embrayée, et une deuxième position permettant de vidanger ce fluide de manière à placer ledit récepteur en position débrayée.

Lorsque la boîte de vitesses automatique est du type à train(s) épicycloïdal(aux), le récepteur hydraulique peut être un embrayage ou un frein hydraulique.

Un tel récepteur permet la transmission du couple entre l'ensemble moto-propulseur et la boîte de vitesses automatique.

On constate en pratique qu'il est nécessaire de débrayer ce récepteur de manière à découpler la boîte de vitesses de l'ensemble moto-propulseur lorsque le véhicule automobile est à l'arrêt pour éviter que la caisse de ce véhicule ne se mette à « bourdonner », c'est-à-dire à vibrer selon des fréquences relativement basses.

L'entrée dans et la sortie du mode de débrayage à l'arrêt donnent lieu à des sauts de couple qu'il importe d'atténuer afin de ne pas nuire au confort des passagers.

On réalise couramment cette atténuation en utilisant des moyens de commande permettant de placer sélectivement la vanne susmentionnée dans ses première et deuxième positions en fonction de divers paramètres tels que les régimes de rotation de l'ensemble moto-propulseur et de la turbine du convertisseur de couple.

Par la publication FR 2 750 746 on connaît un dispositif de commande d'embrayage comprenant un tiroir oscillant entre une position d'actionnement et une position de libération de l'embrayage. Toutefois, de tels moyens de commande impliquent des circuits hydrauliques d'asservissement relativement complexes dédiés spécifiquement à la gestion des sauts de couple. Par contre, la publication US-A-4718525 montre un dispositif selon le préambule de la revendication 1.

La présente invention a pour but de fournir des moyens pour atténuer les sauts de couple beaucoup plus simples que ceux qui viennent d'être mentionnés.

On atteint le but de l'invention avec un dispositif pour commander au moins un récepteur hydraulique destiné à coupler une boîte de vitesses automatique à un convertisseur de couple monté sur un ensemble moto-propulseur de véhicule automobile, comprenant au moins une vanne mobile entre une première position permettant d'envoyer un fluide sous pression dans ledit récepteur de manière à placer ce dernier en position embrayée, et une deuxième position permettant de vidanger ce fluide de manière à placer ledit récepteur en position débrayée, remarquable en ce qu'il comprend des moyens pour faire battre ladite vanne entre lesdites première et deuxième positions lorsque ledit véhicule automobile se trouve en mode de débrayage à l'arrêt.

Grâce à ce dispositif, on peut moduler finement la pression du fluide dans le récepteur lorsque les conditions d'entrée et de sortie du mode de débrayage à l'arrêt deviennent vraies sans qu'il soit nécéssaire de faire appel à des circuits hydrauliques d'asservissement complexes dédiés spécifiquement à la gestion des sauts de couple.

Suivant d'autre caractéristiques de ce dispositif:
- lesdits moyens de battement comprennent un calculateur de transmission destiné à superviser le fonctionnement dudit récepteur et de ladite boîte de vitesses, relié électriquement d'une part à ladite vanne et d'autre par à un calculateur de contrôle moteur destiné à superviser le fonctionnement dudit ensemble moto-propulseur,
- lesdits calculateurs de transmission et de contrôle moteur sont intégrés en un seul calculateur,
- ce dispositif comprend en outre des moyens pour faire varier la pression d'alimentation de ladite vanne selon des lois prédéterminées,
- lesdits moyens de variation comprennent d'une part un régulateur de pression relié électriquement audit calculateur de transmission, et d'autre part ce calculateur lui-même.

La présente invention fournit également un procédé appliqué à un dispositif conforme à ce qui précède, remarquable en ce qu'on fait battre ladite vanne entre lesdites première et deuxième positions lorsque ledit véhicule automobile se trouve en mode de débrayage à l'arrêt.

Grâce à ce procédé, il suffit de faire battre la vanne susmentionnée selon des séquences prédéfinies pour moduler finement la pression dans le récepteur hydraulique et éviter ainsi les sauts de couple.

Suivant d'autres caractéristiques de ce procédé :
- on produit lesdits battements lorsque les conditions d'entrée dans ledit mode de débrayage à l'arrêt deviennent vraies,
- on produit lesdits battements lorsque les conditions de maintien dudit mode de débrayage à l'arrêt deviennent vraies,
- on produit lesdits battements lorsque les conditions de sortie dudit mode de débrayage à l'arrêt deviennent vraies,
- on adapte le taux de modulation desdits battements en fonction de la phase dudit mode de débrayage à l'arrêt dans laquelle ledit véhicule automobile se trouve,
- on gère ledit taux de modulation de manière à éviter une variation brutale du couple transmis par ledit récepteur hydraulique,
- respectivement, on fait croître linéairement, on maintient constant et on fait décroître linéairement ledit taux de modulation pour les phases d'entrée, de maintien et de sortie du mode de débrayage à l'arrêt,
- on produit lesdits battements selon une fréquence constante,
- on fait varier ladite pression d'alimentation selon lesdites lois lorsque ledit véhicule automobile se trouve dans ledit mode de débrayage à l'arrêt,
- on maintient ladite pression d'alimentation à une première valeur de consigne constante lorsque les conditions d'entrée dans ledit mode de débrayage à l'arrêt deviennent vraies,
- on maintient ladite pression d'alimentation à une deuxième valeur de consigne lorsque les conditions de maintien dudit mode de débrayage à l'arrêt deviennent vraies,
- lorsque les conditions de sortie dudit mode de débrayage à l'arrêt deviennent vraies, on maintient ladite pression d'alimentation à une troisième valeur de consigne constante au plus pendant une durée prédéterminée puis on fait croître cette pression jusqu'à une quatrième valeur de consigne,
- on prédétermine ladite durée à partir d'une table dont la variable d'entrée est la température dudit fluide,
- on fait croître linéairement ladite pression d'alimentation jusqu'à ladite quatrième valeur de consigne,
- on détermine la pente de ladite croissance linéaire à partir d'une table de valeurs dont la variable d'entrée est la température dudit fluide,
- on détermine la pente de ladite croissance linéaire à partir d'une table dont la variable d'entrée est la valeur du couple fourni par ledit ensemble moto-propulseur ou une position de pédale d'accélérateur,
- on commence à faire croître ladite pression d'alimentation jusqu'à ladite quatrième valeur de consigne dès que la valeur du couple fourni par ledit ensemble moto-propulseur atteint un seuil prédéterminé,
- on allonge ladite durée prédéterminée lorsque le rapport de vitesse « neutre » de ladite boîte de vitesses est engagé,
- on détermine lesdites première et/ou deuxième et/ou troisième et/ou quatrième valeurs de consigne en fonction de la valeur du couple que doit transmettre ledit récepteur hydraulique,
- on détermine la valeur dudit couple au moyen dudit calculateur de contrôle moteur,
- on détermine la valeur dudit couple d'après une position de pédale d'accélérateur.

D'autres caractéristiques et avantages de la présente invention apparaîtront à la lecture de la description qui va suivre et à l'examen du dessin annexé, dans lequel :
- la figure 1 représente de manière schématique une chaîne de propulsion et de transmission équipée du dispositif selon l'invention,
- la figure 2 est un graphique représentant l'état d'ouverture/fermeture dans le temps d'une vanne du dispositif de la figure 1,
- la figure 3 est un graphique représentant l'évolution temporelle d'une consigne de pression d'alimentation de la vanne susmentionnée en phase de sortie du mode de débrayage à l'arrêt,
- la figure 4 est un graphique représentant une table permettant de déterminer une valeur limite de la consigne de pression susmentionnée,
- les figures 5 à 7 sont des graphiques représentant des tables permettant de déterminer certains paramètres de l'évolution temporelle susmentionnée, et
- la figure 8 est un graphique représentant une variante dans laquelle l'évolution temporelle susmentionnée est influencée par le couple de propulsion.

Sur ces figures, des références numériques identiques désignent des organes ou ensembles d'organes identiques ou analogues.

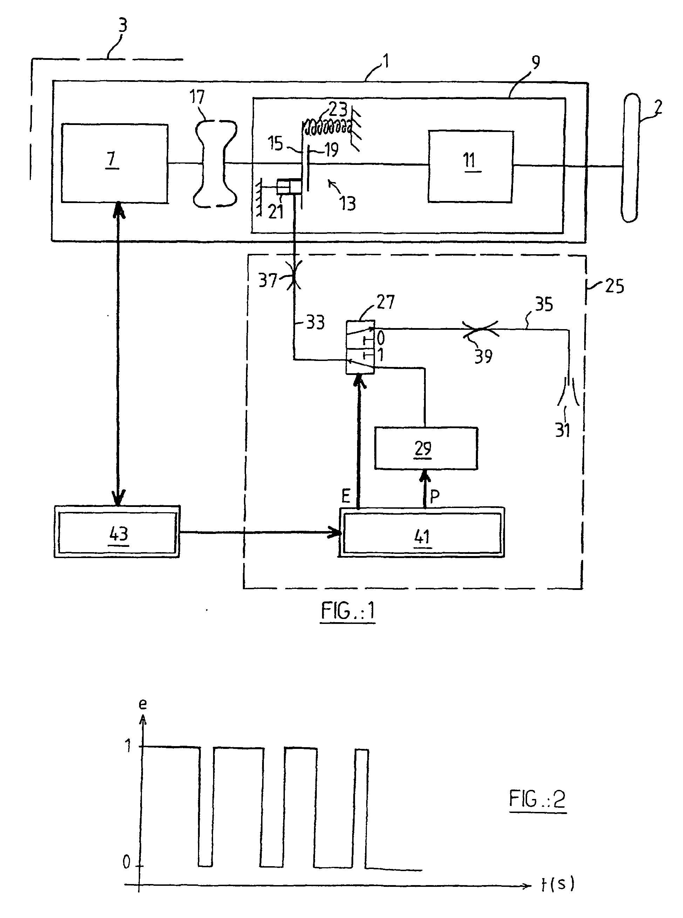

On se reporte à présent à la figure 1, sur laquelle on a représenté une chaîne de propulsion et de transmission 1 destinée entraîner au moins une roue 2 d'un véhicule automobile 3.

Cette chaîne 1 comprend un ensemble moto-propulseur 7 comprenant par exemple un moteur à combustion interne, un moteur électrique ou un moteur hybride, et un ensemble de transmission 9 comprenant une boîte de vitesses automatique 11 pouvant être du type à train (s) épicycloïdal(aux) ou à rapport continûment variable (CVT ou « Continuous Variable Transmission »).

L'ensemble de transmission 9 comprend en outre au moins un embrayage ou un frein hydraulique 13, permettant, comme cela est connu en soi, de changer de rapport de vitesses.

Cet embrayage ou ce frein sera désigné par le terme générique de « récepteur hydraulique » dans ce qui suit.

Ce récepteur hydraulique 13 comprend typiquement au moins un premier disque 15 susceptible d'être couplé à l'ensemble moto-propulseur 7 par l'intermédiaire d'un convertisseur de couple 17, et un deuxième disque 19 couplé en permanence au reste de la boîte de vitesses 11.

Des moyens tels qu'un vérin hydraulique 21 sont susceptibles d'agir sur le premier disque 15 à l'encontre d'un ressort de rattrapage de jeu 23 de manière à plaquer ce premier disque contre le deuxième disque 19 et à entraîner ainsi ce dernier par friction.

Le ressort 19 garantit l'absence de transmission de couple lorsque le récepteur hydraulique 13 n'est pas actionné.

Le dispositif 25 selon l'invention comprend des moyens pour commander la pression d'un fluide de préférence sensiblement incompressible tel que de l'huile dans le vérin 21.

Comme cela apparaît sur la figure 1, ces moyens comprennent au moins une vanne 27 telle qu'une électrovanne à deux positions et trois voies pouvant se trouver sélectivement dans une première position (« 1 ») où elle met le vérin 21 en communication de fluide avec un régulateur de pression 29, et dans une deuxième position (« 0 ») où elle met ce vérin en communication de fluide avec une bâche de vidange 31.

Les conduites 33 et 35 reliant respectivement le vérin 21 à la vanne 27 et cette vanne à la bâche 31 comportent de préférence des étranglements calibrés 37, 39.

Le dispositif 25 selon l'invention comprend également un calculateur de transmission 41 permettant de superviser le fonctionnement de l'ensemble de transmission 9, et notamment du récepteur hydraulique 13.

Ce calculateur de transmission est relié électriquement à la vanne 27, au régulateur de pression 29 et à un calculateur de contrôle moteur 43 connu en soi permettant de superviser le fonctionnement de l'ensemble moto-propulseur 7.

Selon une variante possible, le calculateur de transmission 41 et le calculateur de contrôle moteur 43 peuvent être intégrés en un seul calculateur.

Le mode de fonctionnement du dispositif 25 va être décrit à présent en détail.

Le calculateur de transmission 41 exploite des informations fournies :
- par le calculateur de contrôle moteur 43,
- le cas échéant, par d'autres calculateurs (non représentés), et
- par différents capteurs (non représentés) indiquant les valeurs de différentes variables physiques internes à l'ensemble de transmission 9,
afin de déterminer si les conditions d'entrée, de maintien et de sortie du mode de débrayage à l'arrêt sont vraies (que la boîte de vitesses 11 se trouve en position marche avant, marche arrière ou neutre).

Le calculateur de transmission 41 envoie alors à la vanne 27 un signal E permettant de la faire battre, c'est-à-dire de la faire osciller entre ses première (« 1 ») et deuxième (« 0 ») positions, conformément à ce qui est visible sur le graphique de la figure 2 où l'on a représenté l'état e de cette vanne au cours du temps.

Le battement de la vanne 27 permet d'évacuer de manière contrôlée vers la bâche 31 une partie de l'huile située dans le vérin 21 et dans la conduite 33, ainsi que d'introduire de manière contrôlée une partie de l'huile sous pression provenant du régulateur 29.

En jouant sur le taux de modulation du battement (rapport entre les durées où la vanne 27 se trouve respectivement dans les première et deuxième positions), on peut régler de manière très précise la pression d'huile dans le vérin 21, et éviter ainsi les sauts de couple.

De préférence, le calculateur de contrôle moteur 43 signale également au calculateur de transmission 41 quand les conditions de maintien et de sortie du mode de débrayage à l'arrêt deviennent vraies.

De préférence, le calculateur 41 fait battre la vanne 27 selon des taux de modulation adaptés à chacune des phases d'entrée, de maintien et de sortie du mode de débrayage à l'arrêt.

De préférence, ces taux de modulations sont respectivement croissant linéairement, constant et décroissant linéairement pour les phases d'entrée, de maintien et de sortie du mode de débrayage à l'arrêt.

De préférence, le calculateur de transmission 41 fait battre la vanne 27 à fréquence constante.

De préférence également, ce calculateur envoie une consigne de pression P au régulateur 29 lorsque les conditions d'entrée, de maintien et de sortie du mode de débrayage à l'arrêt sont vraies, de manière que ce régulateur alimente la vanne 27 avec de l'huile sous cette pression.

De préférence, cette consigne est adaptée à chaque phase du mode de débrayage à l'arrêt.

De préférence, cette consigne prend respectivement des première et deuxième valeurs constantes lorsque les conditions d'entrée et de maintien du mode de débrayage à l'arrêt deviennent vraies.

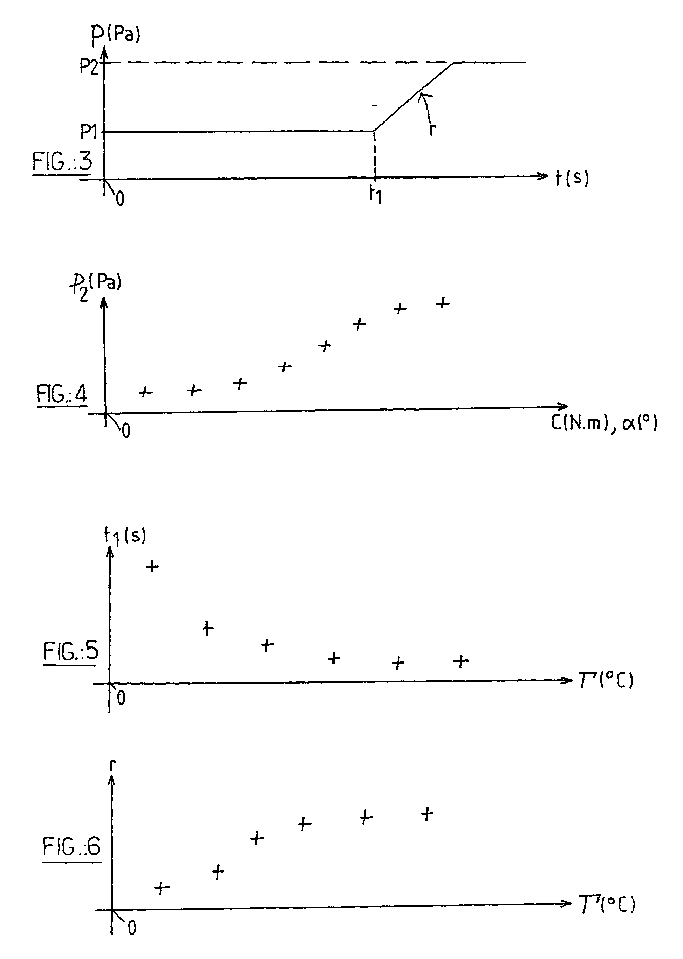

De préférence et comme cela est visible sur la figure 3, cette consigne de pression prend une troisième valeur constante P1 pendant une durée prédéterminée t1 lorsque les conditions de sortie du mode de débrayage à l'arrêt deviennent vraies, puis elle croît jusqu'à une quatrième valeur P2.

De manière préférée, les première, deuxième, troisième et quatrième valeurs de consigne susmentionnées sont établies en fonction du couple C que doit transmettre le récepteur hydraulique 13, la valeur de ce couple pouvant être déterminée par le calculateur de contrôle moteur 43 ou d'après une position α de pédale d'accélérateur (non représentée) permettant de commander le régime de l'ensemble moto-propulseur 7.

De manière préférée, on utilise une table telle que celle représentée sur la figure 4 permettant, pour une valeur donnée de couple C ou de position α de pédale d'accélérateur, de déterminer la quatrième valeur de consigne de pression P2.

De préférence, la durée prédéterminée t1 est établie au moyen d'une table telle que celle représentée sur la figure 5, donnant la valeur de cette durée pour différentes valeurs de la température T de l'huile permettant d'actionner le récepteur 13.

De préférence, on fait croître linéairement la pression de consigne P entre les valeurs P1 et P2, selon une pente r (voir figure 3).

De préférence, cette pente r est établie grâce à une table représentée sur la figure 6, donnant la valeur de cette pente pour différentes valeurs de la température susmentionnée.

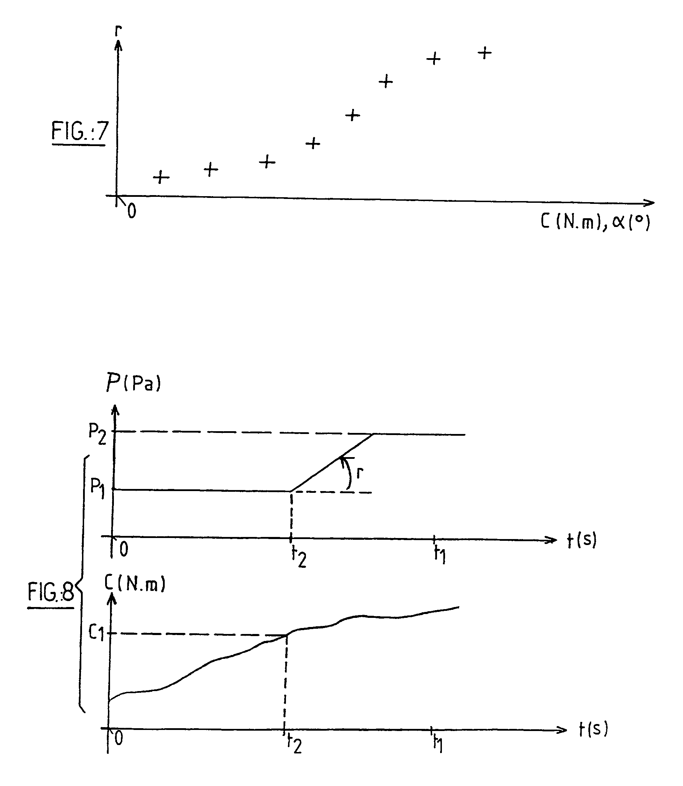

En variante, cette pente r peut être établie grâce à une table telle que celle représentée sur la figure 7, donnant la valeur de cette pente pour différentes valeurs du couple C ou de la position de pédale α susmentionnés.

Selon une variante possible, on peut faire croître la consigne de pression P de la valeur P1 jusqu'à la valeur P2 dès que le couple C fourni par l'ensemble moto-propulseur 7 atteint un seuil C1, comme cela est visible sur la figure 8 où la pression P commence à croître au bout d'une durée t2 inférieure à t1.

Selon une autre variante possible, on peut allonger la durée prédéterminée t1 lorsque le mode de débrayage à l'arrêt est activé alors que le rapport de vitesse « N » (neutre) de la boîte de vitesses 11 est engagé.

Si le véhicule 3 se trouve en début du mode de débrayage à l'arrêt et que les conditions de sortie de ce mode deviennent tout d'un coup vraies, la phase d'entrée de ce mode est interrompue, et la phase de sortie est activée.

Comme on peut le comprendre à présent, le fait de faire battre la vanne 27 tout en l'alimentant en huile sous pression en provenance du régulateur 29 permet de moduler finement la pression d'huile dans le récepteur 13 afin d'éviter les sauts de couple, sans qu'il soit nécessaire de faire appel à des circuits hydrauliques d'asservissement complexes dédiés à cette fonction.

La mise en oeuvre de l'invention nécessite en fait simplement d'implanter un code de calcul approprié dans le calculateur de transmission ou dans le calculateur de contrôle moteur, ce qui permet notamment d'équiper très simplement des véhicules automobiles en après-vente.

Bien entendu, la présente invention n'est pas limitée au mode de réalisation décrit et représenté, fourni à titre illustratif et non limitatif.

C'est ainsi que le dispositif selon l'invention pourrait être adapté de manière évidente pour commander plusieurs récepteurs hydrauliques. Il faudrait pour cela commander chacune des vannes associées à ces récepteurs selon la stratégie exposée ci-dessus.

C'est ainsi également que l'on pourrait se contenter de faire battre la vanne 27 sans faire varier la pression de l'huile provenant du régulateur 29.

C'est ainsi encore que l'on pourrait n'appliquer que partiellement la stratégie exposée ci-dessus, c'est-à-dire par exemple uniquement lors de l'entrée ou de la sortie du mode de débrayage à l'arrêt.

## Revendications

1. Dispositif (25) pour commander au moins un récepteur hydraulique (13) destiné à coupler une boîte de vitesses automatique (11) à un convertisseur de couple (17) monté sur un ensemble moto-propulseur (7) de véhicule automobile (3), comprenant au moins une vanne (27) mobile entre une première position permettant d'envoyer un fluide sous pression dans ledit récepteur (13) de manière à placer ce dernier en position embrayée, et une deuxième position permettant de vidanger ce fluide de manière à placer ledit récepteur (13) en position débrayée, **caractérisé en ce qu'**il comprend des moyens (41) pour faire battre ladite vanne (27) entre lesdites première et deuxième positions lorsque ledit véhicule automobile (3) se trouve en mode de débrayage à l'arrêt.

2. Dispositif (25) selon la revendication 1, **caractérisé en ce que** lesdits moyens de battement comprennent un calculateur de transmission (41) destiné à superviser le fonctionnement dudit récepteur (13) et de ladite boîte de vitesses (11), relié électriquement d'une part à ladite vanne (27) et d'autre part à un calculateur de contrôle moteur (43) destiné à superviser le fonctionnement dudit ensemble moto-propulseur (7).

3. Dispositif (25) selon la revendication 2, **caractérisé en ce que** lesdits calculateurs de transmission (41) et de contrôle moteur (43) sont intégrés en un seul calculateur.

4. Dispositif (25) selon l'une quelconque des revendications 1 à 3, **caractérisé en ce qu'**il comprend en outre des moyens (29, 41) pour faire varier la pression d'alimentation de ladite vanne (27) selon des lois prédéterminées.

5. Dispositif (25) selon la revendication 4 lorsqu'elle dépend de la revendication 2, **caractérisé en ce que** lesdits moyens de variation comprennent d'une part un régulateur de pression (29) relié électriquement audit calculateur de transmission (41), et d'autre part ce calculateur lui-même.

6. Ensemble de transmission (9) pour véhicule automobile comprenant une boite de vitesses automatique (11) et au moins un récepteur hydraulique (13) destiné à coupler ladite boite de vitesses (11) à un convertisseur de couple (17) lui-même monté sur un ensemble moto-propulseur (7), **caractérisé en ce qu'**il est équipé d'un dispositif (25) conforme à l'une quelconque des revendications précédentes pour commander ledit récepteur hydraulique (13).

7. Ensemble de transmission (9) selon la revendication 6, **caractérisé en ce que** ledit récepteur hydraulique (13) est choisi dans le groupe comprenant les embrayages et les freins hydrauliques.

8. Ensemble de transmission (9) selon l'une des revendications 6 ou 7, **caractérisé en ce que** ladite boîte de vitesses automatique (11) est choisie dans le groupe comprenant les transmissions à train(s) épicycloïdal(aux) et les transmissions à rapport de transmission continûment variable.

9. Chaîne de propulsion et de transmission (1) pour véhicule automobile (3), comprenant un ensemble moto-propulseur (7) et un ensemble de transmission (9) susceptible d'être couplé audit ensemble moto-propulseur (7) par l'intermédiaire d'un convertisseur de couple (17), **caractérisé en ce que** ledit ensemble de transmission (9) est conforme à l'une quelconque des revendications 6 à 8.

10. Chaîne de propulsion et de transmission (1) selon la revendication 9, **caractérisée en ce que** ledit ensemble moto-propulseur (7) est choisi dans le groupe comprenant les moteurs à combustion interne, les moteurs électriques et les moteurs hybrides.

11. Véhicule automobile (3), **caractérisé en ce qu'**il est équipé d'une chaîne de propulsion et de transmission (1) conforme à l'une des revendications 9 ou 10.

12. Procédé appliqué à un dispositif (25) conforme à l'une quelconque des revendications 1 à 5, **caractérisé en ce qu'**on fait battre ladite vanne (27) entre lesdites première et deuxième positions lorsque ledit véhicule automobile (3) se trouve en mode de débrayage à l'arrêt.

13. Procédé selon la revendication 12, **caractérisé en ce qu'**on produit lesdits battements lorsque les conditions d'entrée dans ledit mode de débrayage à l'arrêt deviennent vraies.

14. Procédé selon l'une des revendications 12 ou 13, **caractérisé en ce qu'**on produit lesdits battements lorsque les conditions de maintien dudit mode de débrayage à l'arrêt deviennent vraies.

15. Procédé selon l'une quelconque des revendications 12 à 14, **caractérisé en ce qu'**on produit lesdits battements lorsque les conditions de sortie dudit mode de débrayage à l'arrêt deviennent vraies.

16. Procédé selon les revendications 13 à 15, **caractérisé en ce qu'**on adapte le taux de modulation desdits battements en fonction de la phase dudit mode de débrayage à l'arrêt dans laquelle ledit véhicule automobile (3) se trouve.

17. Procédé selon la revendication 16, **caractérisé en ce qu'**on gère ledit taux de modulation de manière à éviter une variation brutale du couple transmis par ledit récepteur hydraulique (13).

18. Procédé selon l'une des revendications 16 ou 17, **caractérisé en ce que**, respectivement, on fait croître linéairement, on maintient constant et on fait décroître linéairement ledit taux de modulation pour les phases d'entrée, de maintien et de sortie du mode de débrayage à l'arrêt.

19. Procédé selon l'une quelconque des revendications 12 à 18, **caractérisé en ce qu'**on produit lesdits battements selon une fréquence constante.

20. Procédé selon l'une quelconque des revendications 12 à 19 appliqué à un dispositif (25) conforme à la revendication 4, **caractérisé en ce qu'**on fait varier ladite pression d'alimentation selon lesdites lois lorsque ledit véhicule automobile (3) se trouve dans ledit mode de débrayage à l'arrêt.

21. Procédé selon les revendications 13 et 20, **caractérisé en ce qu'**on maintient ladite pression d'alimentation à une première valeur de consigne constante lorsque les conditions d'entrée dans ledit mode de débrayage à l'arrêt deviennent vraies.

22. Procédé selon l'une des revendications 20 ou 21 lorsqu'elle dépend de la revendication 14, **caractérisé en ce qu'**on maintient ladite pression d'alimentation à une deuxième valeur de consigne lorsque les conditions de maintien dudit mode de débrayage à l'arrêt deviennent vraies.

23. Procédé selon l'une quelconque des revendications 20 à 22 lorsqu'elle dépend de la revendication 15, **caractérisé en ce que** lorsque les conditions de sortie dudit mode de débrayage à l'arrêt deviennent vraies, on maintient ladite pression d'alimentation à une troisième valeur de consigne constante (P1) au plus pendant une durée prédéterminée (t1) puis **en ce qu'**on fait croître cette pression jusqu'à une quatrième valeur de consigne (P2).

24. Procédé selon la revendication 23, **caractérisé en ce qu'**on prédétermine ladite durée (t1) à partir d'une table dont la variable d'entrée est la température (T) dudit fluide.

25. Procédé selon l'une des revendications 23 ou 24, **caractérisé en ce qu'**on fait croître linéairement ladite pression d'alimentation jusqu'à ladite quatrième valeur de consigne (P2).

26. Procédé selon la revendication 25, **caractérisé en ce qu'**on détermine la pente (r) de ladite croissance linéaire à partir d'une table de valeurs dont la variable d'entrée est la température (T) dudit fluide.

27. Procédé selon la revendication 25, **caractérisé en ce qu'**on détermine la pente (r) de ladite croissance linéaire à partir d'une table dont la variable d'entrée est la valeur du couple (C) fourni par ledit ensemble moto-propulseur (7) ou une position (α) de pédale d'accélérateur.

28. Procédé selon l'une quelconque des revendications 23 à 27, **caractérisé en ce qu'**on commence à faire croître ladite pression d'alimentation jusqu'à ladite quatrième valeur de consigne (P2) dès que la valeur du couple (C) fourni par ledit ensemble moto-propulseur (7) atteint un seuil prédéterminé.

29. Procédé selon l'une quelconque des revendications 23 à 28, **caractérisé en ce qu'**on allonge ladite durée prédéterminée (t1) lorsque le rapport de vitesse « neutre » de ladite boîte de vitesses (11) est engagé.

30. Procédé selon l'une quelconque des revendications 21 à 29, **caractérisé en ce qu'**on détermine lesdites première et/ou deuxième et/ou troisième (P1) et/ou quatrième (P2) valeurs de consigne en fonction de la valeur du couple (C) que doit transmettre ledit récepteur hydraulique (13).

31. Procédé selon la revendication 30 lorsqu'elle dépend de la revendication 2, **caractérisé en ce qu'**on détermine la valeur dudit couple (C) au moyen dudit calculateur de contrôle moteur (43).

32. Procédé selon la revendication 30, **caractérisé en ce qu'**on détermine la valeur dudit couple (C) d'après une position (α) de pédale d'accélérateur.

## Claims

1. Device (25) for controlling at least one hydraulic receiver (13) designed to couple an automatic gearbox (11) to a torque converter (17) mounted on a drive-train assembly (7) of a motor vehicle (3), comprising at least one valve (27) that can move between a first position making it possible to send a pressurized fluid into the said receiver (13) so as to place the latter in an engaged position, and a second position making it possible to discharge this fluid so as to place the said receiver (13) in a disengaged position, **characterized in that** it comprises means (41) for making the said valve (27) oscillate between the said first and second positions when the said motor vehicle (3) is in a disengaged mode when stopped.

2. Device (25) according to Claim 1, **characterized in that** the said oscillation means comprise a transmission computer (41) designed to supervise the operation of the said receiver (13) and of the said gearbox (11), electrically connected on the one hand to the said valve (27) and on the other hand to an engine control computer (43) designed to supervise the operation of the said drive-train assembly (7).

3. Device (25) according to Claim 2, **characterized in that** the said transmission computer (41) and the said engine control computer (43) are incorporated into one single computer.

4. Device (25) according to any one of Claims 1 to 3, **characterized in that** it also comprises means (29, 41) for varying the pressure of supply of the said valve (27) according to predetermined laws.

5. Device (25) according to Claim 4 when it depends on Claim 2, **characterized in that** the said variation means comprise on the one hand a pressure regulator (29) electrically connected to the said transmission computer (41), and on the other hand this computer itself.

6. Transmission assembly (9) for a motor vehicle comprising an automatic gearbox (11) and at least one hydraulic receiver (13) designed to couple the said gearbox (11) to a torque converter (17) itself mounted on a drive-train assembly (7), **characterized in that** it is fitted with a device (25) according to any one of the preceding claims in order to control the said hydraulic receiver (13).

7. Transmission assembly (9) according to Claim 6, **characterized in that** the said hydraulic receiver (13) is chosen from the group comprising the hydraulic clutches and brakes.

8. Transmission assembly (9) according to one of Claims 6 or 7, **characterized in that** the said automatic gearbox (11) is chosen from the group comprising transmissions with epicyclic gear train(s) and transmissions with continuously variable transmission ratio.

9. Propulsion and transmission system (1) for a motor vehicle (3), comprising a drive-train assembly (7) and a transmission assembly (9) capable of being coupled to the said drive-train assembly (7) by means of a torque converter (17), **characterized in that** the said transmission assembly (9) is according to any one of Claims 6 to 8.

10. Propulsion and transmission system (1) according to Claim 9, **characterized in that** the said drive-train assembly (7) is chosen from the group comprising internal combustion engines, electric motors and hybrid engines.

11. Motor vehicle (3) **characterized in that** it is fitted with a propulsion and transmission system (1) according to one of Claims 9 or 10.

12. Method applied to a device (25) according to any one of Claims 1 to 5, **characterized in that** the said valve (27) is made to oscillate between the said first and second positions when the said motor vehicle (3) is in a disengaged mode when stopped.

13. Method according to Claim 12, **characterized in that** the said oscillations are produced when the conditions of entry into the said disengaged mode when stopped become true.

14. Method according to one of Claims 12 or 13, **characterized in that** the said oscillations are produced when the conditions of maintaining the said disengaged mode when stopped become true.

15. Method according to any one of Claims 12 to 14, **characterized in that** the said oscillations are produced when the conditions of exit from the said disengaged mode when stopped become true.

16. Method according to Claims 13 to 15, **characterized in that** the rate of modulation of the said oscillations is adapted according to the phase of the said disengaged mode when stopped that the said motor vehicle (3) is in.

17. Method according to Claim 16, **characterized in that** the said rate of modulation is managed so as to prevent a sudden variation of the torque transmitted by the said hydraulic receiver (13).

18. Method according to one of Claims 16 or 17, **characterized in that** the said rate of modulation is made to increase linearly, is held constant and is made to decrease linearly respectively for the phases of entry to, of maintaining and of exit from the disengaged mode when stopped.

19. Method according to any one of Claims 12 to 18, **characterized in that** the said oscillations are produced according to a constant frequency.

20. Method according to any one of Claims 12 to 19 applied to a device (25) according to Claim 4, **characterized in that** the said supply pressure is made to vary according to the said laws when the said motor vehicle (3) is in the said disengaged mode when stopped.

21. Method according to Claims 13 and 20, **characterized in that** the said supply pressure is maintained at a first constant set point value when the conditions of entry into the said disengaged mode when stopped become true.

22. Method according to one of Claims 20 or 21, when it depends on Claim 14, **characterized in that** the said supply pressure is maintained at a second set point value when the conditions of maintaining the said disengaged mode when stopped become true.

23. Method according to any one of Claims 20 to 22 when it depends on Claim 15, **characterized in that**, when the conditions of exit from the said disengaged mode when stopped become true, the said supply pressure is maintained at a third constant set point value (P1) at most for a predetermined period (t1) then **in that** this pressure is made to increase up to a fourth set point value (P2).

24. Method according to Claim 23, **characterized in that** the said period (t1) is predetermined based on a table the input variable of which is the temperature (T) of the said fluid.

25. Method according to one of Claims 23 or 24, **characterized in that** the said supply pressure is made to increase linearly up to the said fourth set point value (P2).

26. Method according to Claim 25, **characterized in that** the gradient (r) of the said linear increase is determined based on a table of values the input variable of which is the temperature (T) of the said fluid.

27. Method according to Claim 25, **characterized in that** the gradient (r) of the said linear increase is determined based on a table the input variable of which is the value of the torque (C) supplied by the said drive-train assembly (7) or an accelerator pedal position (α).

28. Method according to any one of Claims 23 to 27, **characterized in that** the said supply pressure is begun to be made to increase up to the said fourth set point value (P2) when the value of the torque (C) supplied by the said drive-train assembly (7) reaches a predetermined threshold.

29. Method according to any one of Claims 23 to 28, **characterized in that** the said predetermined period (t1) is lengthened when the "neutral" speed ratio of the said gearbox (11) is engaged.

30. Method according to any one of Claims 21 to 29, **characterized in that** the said first and/or second and/or third (P1) and/or fourth (P2) set point values are determined according to the value of the torque (C) that the said hydraulic receiver (13) must transmit.

31. Method according to Claim 30 when it depends on Claim 2, **characterized in that** the value of the said torque (C) is determined by means of the said engine control computer (43).

32. Method according to Claim 30, **characterized in that** the value of the said torque (C) is determined according to an accelerator pedal position (α).

## Patentansprüche

1. Vorrichtung (25) zum Steuern wenigstens eines Hydraulikaufnehmers (13), der dazu vorgesehen ist, ein Automatikgetriebe (11) mit einem Drehmomentwandler (17) zu koppeln, der an einer Triebwerkbaueinheit (7) eines Kraftfahrzeugs (3) montiert ist, mit wenigstens einem Ventil (27), das zwischen einer ersten Position, die ermöglicht, ein mit Druck beaufschlagtes Fluid in den Aufnehmer (13) zu schicken, derart, dass dieser Letztere in die eingerückte Position gebracht wird, und einer zweiten Position, die ermöglicht, dieses Fluid zu entleeren, derart, dass der Aufnehmer (13) in die ausgerückte Position gebracht wird, beweglich ist, **dadurch gekennzeichnet, dass** sie Mittel (41) enthält, um zu bewirken, dass sich das Ventil (27) zwischen der ersten und der zweiten Position hin und her bewegt, wenn sich das Kraftfahrzeug (3) im Stillstand in der ausgerückten Betriebsart befindet.

2. Vorrichtung (25) nach Anspruch 1, **dadurch gekennzeichnet, dass** die Mittel für die Hin- und Herbewegung einen Getrieberechner (41) enthalten, der dazu bestimmt ist, den Betrieb des Aufnehmers (13) und des Getriebes (11) zu überwachen, und einerseits mit dem Ventil (27) und andererseits mit einem Motorsteuerungsrechner (43), der dazu bestimmt ist, den Betrieb der Triebwerkbaueinheit (7) zu überwachen, verbunden ist.

3. Vorrichtung (25) nach Anspruch 2, **dadurch gekennzeichnet, dass** der Getrieberechner (41) und der Motorsteuerungsrechner (43) in einen einzigen Rechner integriert sind.

4. Vorrichtung (25) nach einem der Ansprüche 1 bis 3, **dadurch gekennzeichnet, dass** sie außerdem Mittel (29, 41) enthält, um den Versorgungsdruck des Ventils (27) in Übereinstimmung mit vorgegebenen Gesetzen zu verändern.

5. Vorrichtung (25) nach Anspruch 4, wenn abhängig von Anspruch 2, **dadurch gekennzeichnet, dass** die Veränderungsmittel einerseits einen Druckregulierer (29), der mit dem Getrieberechner (41) elektrisch verbunden ist, und andererseits diesen Rechner selbst enthalten.

6. Getriebebaueinheit (9) für Kraftfahrzeug, die ein Automatikgetriebe (11) und wenigstens einen Hydraulikaufnehmer (13) enthält, der dazu bestimmt ist, das Getriebe (11) mit einem Drehmomentwandler (17) zu koppeln, der seinerseits an einer Triebwerkbaueinheit (7) montiert ist, **dadurch gekennzeichnet, dass** sie mit einer Vorrichtung (25) nach einem der vorhergehenden Ansprüche ausgerüstet ist, um den Hydraulikaufnehmer (13) zu steuern.

7. Getriebebaueinheit (9) nach Anspruch 6, **dadurch gekennzeichnet, dass** der Hydraulikaufnehmer (13) aus der Gruppe gewählt ist, die hydraulische Kupplungen und hydraulische Bremsen enthält.

8. Getriebebaueinheit (9) nach einem der Ansprüche 6 oder 7, **dadurch gekennzeichnet, dass** das Automatikgetriebe (11) aus der Gruppe gewählt ist, die Planetengetriebe und kontinuierlich veränderliche Getriebe enthält.

9. Triebwerk- und Getriebestrang (1) für Kraftfahrzeug (3), mit einer Triebwerkbaueinheit (7) und einer Getriebebaueinheit (9), die mit der Triebwerkbaueinheit (7) über einen Drehmomentwandler (17) gekoppelt werden kann, **dadurch gekennzeichnet, dass** die Getriebebaueinheit (9) wie in einem der Ansprüche 6 bis 8 angegeben beschaffen ist.

10. Triebwerk- und Getriebestrang (1) nach Anspruch 9, **dadurch gekennzeichnet, dass** die Triebwerkbaueinheit (7) aus der Gruppe gewählt ist, die Brennkraftmaschinen, Elektromotoren und Hybridmotoren enthält.

11. Kraftfahrzeug (3), **dadurch gekennzeichnet, dass** es mit einem Triebwerk- und Getriebestrang (1) nach einem der Ansprüche 9 oder 10 ausgerüstet ist.

12. Verfahren, das auf eine Vorrichtung (25) nach einem der Ansprüche 1 bis 5 angewendet wird, **dadurch gekennzeichnet, dass** bewirkt wird, dass sich das Ventil (27) zwischen der ersten und der zweiten Position hin und her bewegt, wenn sich das Kraftfahrzeug (3) im Stillstand in der ausgerückten Betriebsart befindet.

13. Verfahren nach Anspruch 12, **dadurch gekennzeichnet, dass** die Hin- und Herbewegungen erzeugt werden, wenn die Bedingungen für den Eintritt in die ausgerückte Betriebsart im Stillstand wahr werden.

14. Verfahren nach einem der Ansprüche 12 oder 13, **dadurch gekennzeichnet, dass** die Hin- und Herbewegungen erzeugt werden, wenn die Bedingungen zum Aufrechterhalten der ausgerückten Betriebsart im Stillstand wahr werden.

15. Verfahren nach einem der Ansprüche 12 bis 14, **dadurch gekennzeichnet, dass** die Hin- und Herbewegungen erzeugt werden, wenn die Bedingungen zum Verlassen der ausgerückten Betriebsart im Stillstand wahr werden.

16. Verfahren nach den Ansprüchen 13 bis 15, **dadurch gekennzeichnet, dass** der Modulationsgrad der Hin- und Herbewegungen in Abhängigkeit von der Phase der ausgerückten Betriebsart im Stillstand, in der sich das Kraftfahrzeug (3) befindet, angepasst wird.

17. Verfahren nach Anspruch 16, **dadurch gekennzeichnet, dass** der Modulationsgrad in der Weise gesteuert wird, dass eine plötzliche Veränderung des von dem Hydraulikaufnehmer (13) übertragenen Drehmoments verhindert wird.

18. Verfahren nach einem der Ansprüche 16 oder 17, **dadurch gekennzeichnet, dass** der Modulationsgrad für die Eintrittsphase, die Haltephase und die Austrittsphase der ausgerückten Betriebsart im Stillstand linear erhöht bzw. konstant gehalten bzw. linear gesenkt wird.

19. Verfahren nach einem der Ansprüche 12 bis 18, **dadurch gekennzeichnet, dass** die Hin- und Herbewegungen mit einer konstanten Frequenz erzeugt werden.

20. Verfahren nach einem der Ansprüche 12 bis 19, das auf eine Vorrichtung (25) nach Anspruch 4 angewendet wird, **dadurch gekennzeichnet, dass** der Versorgungsdruck gemäß den Gesetzen verändert wird, wenn sich das Kraftfahrzeug (3) im Stillstand in der ausgerückten Betriebsart befindet.

21. Verfahren nach den Ansprüchen 13 und 20, **dadurch gekennzeichnet, dass** der Versorgungsdruck auf einem ersten konstanten Sollwert gehalten wird, wenn die Bedingungen für den Eintritt in die ausgerückte Betriebsart im Stillstand wahr werden.

22. Verfahren nach einem der Ansprüche 20 oder 21, wenn abhängig von Anspruch 14, **dadurch gekennzeichnet, dass** der Versorgungsdruck auf einem zweiten Sollwert gehalten wird, wenn die Bedingungen für das Aufrechterhalten der ausgerückten Betriebsart im Stillstand wahr werden.

23. Verfahren nach einem der Ansprüche 20 bis 22, wenn abhängig von Anspruch 15, **dadurch gekennzeichnet, dass** der Versorgungsdruck dann, wenn die Bedingungen zum Verlassen der ausgerückten Betriebsart im Stillstand wahr werden, während einer vorgegebenen Dauer (t1) höchstens auf einem dritten konstanten Sollwert (P1) gehalten wird und dass dann dieser Druck bis zu einem vierten Sollwert (P2) erhöht wird.

24. Verfahren nach Anspruch 23, **dadurch gekennzeichnet, dass** die Dauer (t1) anhand einer Tabelle, deren Eingangsvariable die Temperatur (T) des Fluids ist, vorgegeben ist.

25. Verfahren nach einem der Ansprüche 23 oder 24, **dadurch gekennzeichnet, dass** der Versorgungsdruck bis zu dem vierten Sollwert (P2) linear erhöht wird.

26. Verfahren nach Anspruch 25, **dadurch gekennzeichnet, dass** die Steigung (r) der linearen Zunahme anhand einer Wertetabelle bestimmt wird, deren Eingangsvariable die Temperatur (T) des Fluids ist.

27. Verfahren nach Anspruch 25, **dadurch gekennzeichnet, dass** die Steigung (r) der linearen Zunahme anhand einer Tabelle bestimmt wird, deren Eingangsvariable entweder der Wert des von der Triebwerkbaueinheit (7) gelieferten Drehmoments (C) oder eine Pedalstellung (α) des Fahrpedals ist.

28. Verfahren nach einem der Ansprüche 23 bis 27, **dadurch gekennzeichnet, dass** mit dem Erhöhen des Versorgungsdrucks bis zu dem vierten Sollwert (P2) begonnen wird, sobald der Wert des von der Triebwerkbaueinheit (7) gelieferten Drehmoments (C) einen vorgegebenen Schwellenwert erreicht.

29. Verfahren nach einem der Ansprüche 23 bis 28, **dadurch gekennzeichnet, dass** die vorgegebene Dauer (t1) verlängert wird, wenn das "neutrale" Übersetzungsverhältnis des Getriebes (11) eingelegt ist.

30. Verfahren nach einem der Ansprüche 21 bis 29, **dadurch gekennzeichnet, dass** der erste und/oder der zweite und/oder der dritte (P1) und/oder der vierte (P2) Sollwert in Abhängigkeit von dem Wert des Drehmoments (C), das der Hydraulikaufnehmer (13) übertragen soll, bestimmt wird.

31. Verfahren nach Anspruch 30, wenn abhängig von Anspruch 2, **dadurch gekennzeichnet, dass** der Wert des Drehmoments (C) mittels des Motorsteuerungsrechners (43) bestimmt wird.

32. Verfahren nach Anspruch 30, **dadurch gekennzeichnet, dass** der Wert des Drehmoments (C) in Übereinstimmung mit einer Stellung (α) des Fahrpedals bestimmt wird.
